(19) **Europäisches Patentamt**
**European Patent Office**
**Office européen des brevets**

(11) **EP 4 668 193 A1**

(12) **EUROPEAN PATENT APPLICATION**

(43) Date of publication:
**24.12.2025 Bulletin 2025/52**

(21) Application number: **24216309.5**

(22) Date of filing: **28.11.2024**

(51) International Patent Classification (IPC):
**G06Q 30/0242** *(2023.01)* **G06Q 30/0251** *(2023.01)*
**G06N 3/084** *(2023.01)*

(52) Cooperative Patent Classification (CPC):
**G06Q 30/0254; G06N 20/00; G06Q 30/0244;**
**G06Q 30/0269;** G06N 3/084

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **19.06.2024 CN 202410798704**

(71) Applicant: **Alipay (Hangzhou) Information**
**Technology Co., Ltd.**
**Hangzhou, Zhejiang 310000 (CN)**

(72) Inventors:
• **JIANG, Jiadi**
  **Hangzhou, Zhejiang Province, 310000 (CN)**
• **YUE, Yun**
  **Hangzhou, Zhejiang Province, 310000 (CN)**
• **GAO, Ning**
  **Hangzhou, Zhejiang Province, 310000 (CN)**
• **YE, Zhiling**
  **Hangzhou, Zhejiang Province, 310000 (CN)**
• **ZHANG, Ke**
  **Hangzhou, Zhejiang Province, 310000 (CN)**

(74) Representative: **Winter, Brandl - Partnerschaft**
**mbB**
**Alois-Steinecker-Straße 22**
**85354 Freising (DE)**

(54) **METHODS AND APPARATUSES FOR TRAINING USER BEHAVIOR PREDICTION MODEL**

(57)    The disclosure provides methods and apparatuses for training a user behavior prediction model. A sample set generated through streaming is obtained, where any sample includes a sample feature, a first label, and a second label. A sample feature of each sample is input into the model, to obtain a prediction result about whether a corresponding user performs specific behavior. Each corresponding prediction loss is determined based on the prediction result and a first label value. A sample category that indicates a delay status and to which each sample belongs is determined based on the first label value and a second label value, and a weight value of each sample is determined based on the sample category. Weighted combination is performed on each prediction loss corresponding to each sample based on the weight value, and a parameter of the model is adjusted based on an obtained combined loss.

EP 4 668 193 A1

## Description

### TECHNICAL FIELD

One or more embodiments of this specification relate to the field of computer technologies, and in particular, to methods and apparatuses for training a user behavior prediction model.

### BACKGROUND

Service platforms usually recommend or push target objects such as user's benefits, products, or advertisement pictures to users. To effectively recommend, to the users, target objects that meet needs and preferences of the users, the service platforms can use a machine learning model to predict user behavior, that is, predict whether a certain user is to perform specific behavior on a certain target object, so as to determine, based on a prediction result, whether to recommend a certain target object to a certain user.

In most cases, to further improve prediction accuracy, the latest data generated within a short time are used to update (or train) the machine learning model. However, a time interval between a time at which a user performs specific behavior and an exposure time of a target object is uncertain, for example, may be 1 minute, 1 hour, or even a few days. In other words, the specific behavior performed by the user has a delay, and such a delay may lead to an inaccurate label of collected data for updating the model. For example, due to the delay of the specific behavior of the user, some positive samples are incorrectly marked as negative samples (this is referred to as a positive sample delayed feedback problem below). This affects accuracy of predicting user behavior by the machine learning model.

Therefore, a solution needs to be provided to effectively improve accuracy of user behavior prediction.

### SUMMARY

One or more embodiments of this specification describe methods and apparatuses for training a user behavior prediction model, to improve accuracy of user behavior prediction.

According to a first aspect, a method for training a user behavior prediction model is provided, including:

obtaining a sample set generated through streaming, where any sample includes a sample feature, a first label, and a second label, the first label indicates whether a corresponding user has performed specific behavior on a target object currently, and the second label indicates whether the specific behavior of the corresponding user is within first duration starting from exposure of the target object to the corresponding user;

inputting a sample feature of each sample into the user behavior prediction model, to obtain a prediction result about whether the corresponding user performs specific behavior;

determining each corresponding prediction loss based on the prediction result and a first label value of each sample;

determining, based on the first label value and a second label value of each sample, a sample category that indicates a delay status and to which each sample belongs, and determining a weight value of each sample based on the sample category; and

performing weighted combination on each prediction loss corresponding to each sample based on the weight value of each sample, and adjusting a parameter of the user behavior prediction model based on an obtained combined loss.

According to a second aspect, an apparatus for training a user behavior prediction model is provided, including:

an obtaining unit, configured to obtain a sample set generated through streaming, where any sample includes a sample feature, a first label, and a second label, the first label indicates whether a corresponding user has performed specific behavior on a target object currently, and the second label indicates whether the specific behavior of the corresponding user is within first duration starting from exposure of the target object to the corresponding user;

an input unit, configured to input a sample feature of each sample into the user behavior prediction model, to obtain a prediction result about whether the corresponding user performs specific behavior;

a determining unit, configured to determine each corresponding prediction loss based on the prediction result and a first label value of each sample, where

the determining unit is further configured to determine, based on the first label value and a second label value of each sample, a sample category that indicates a delay status and to which each sample belongs, and determine a weight value of each sample based on the sample category; and

an adjustment unit, configured to perform weighted combination on each prediction loss corresponding to each sample based on the weight value of each sample, and adjust a parameter of the user behavior prediction model based on an obtained combined loss.

According to a third aspect, a computer-readable storage medium is provided. The computer-readable storage medium stores a computer program, and when the computer program is executed in a computer, the computer is enabled to perform the method according to the first aspect.

According to a fourth aspect, a computing device is provided, including a memory and a processor. The memory stores executable code, and when executing the executable code, the processor implements the method according to the first aspect.

In the methods and the apparatuses for training a user behavior prediction model provided in one or more embodiments of this specification, it is first proposed to set two labels for each sample in a sample set, so that a sample category that indicates a delay status and to which each sample belongs can be determined for each sample. Then, it is proposed to perform weighted combination on each corresponding prediction loss based on the sample category of each sample. As such, different importance considerations can be performed for samples with different delay statuses in a training process. This helps improve accuracy of user behavior prediction.

**BRIEF DESCRIPTION OF DRAWINGS**

To describe the technical solutions in embodiments of this specification more clearly, the following briefly describes the accompanying drawings for describing the embodiments. Clearly, the accompanying drawings in the following descriptions show merely some embodiments of this specification, and a person of ordinary skill in the art can still derive other accompanying drawings from these accompanying drawings without creative efforts.

FIG. 1 is a schematic diagram illustrating an implementation scenario of embodiments disclosed in this specification;
FIG. 2 is a flowchart illustrating a method for training a user behavior prediction model, according to some embodiments;
FIG. 3 is a schematic diagram illustrating a sample set in an example;
FIG. 4 is a schematic diagram illustrating a sample set in another example; and
FIG. 5 is a schematic diagram illustrating an apparatus for training a user behavior prediction model, according to some embodiments.

**DESCRIPTION OF EMBODIMENTS**

The solutions provided in this specification are described below with reference to the accompanying drawings.

In this specification, a sample set including the latest data generated in real time is referred to as a sample stream, and a machine learning model updated based on a sample stream constructed based on user behavior is referred to as a user behavior prediction model.

It should be understood that each sample in an ideal sample stream appears only once, and a label of the sample can be accurately known. However, actually, due to existence of a positive sample delayed feedback problem, problems of sample repetition and a label error are inevitable in an actual sample stream. A distribution difference between the ideal sample stream and the actual sample stream can be corrected through importance sampling.

The following describes a general method for importance sampling.

(x, y) is used to represent a data point, where x is a feature, and y is a label. An ideal data distribution is p(x,y), and an actual data distribution is q(x,y). $f_\theta(x)$ is used to represent a probability that a model predicts a sample x as a converted sample (that is, a user performs specific behavior). $l(y, f_\theta(x))$ is used to represent a loss function. An ideal loss function $L_{idea}$ can be estimated by using a loss function $L_{iw}$ corrected based on an importance weight:

$$
\begin{aligned}
L_{idea} &= \mathbb{E}_{(x,y)\sim p} l\big(y, f_\theta(x)\big) \\
&= \int p(x)dx \int p(y|x) l\big(y, f_\theta(x)\big) dy \\
&= \int p(x)dx \int q(y|x) \frac{p(y|x)}{q(y|x)} l\big(y, f_\theta(x)\big) dy \\
&\approx \mathbb{E}_{(x,y)\sim q} \frac{p(y|x)}{q(y|x)} l\big(y, f_\theta(x)\big) \\
&= L_{iw}
\end{aligned}
\qquad \text{(Formula 1)}
$$

It is worthwhile to note that a precondition for approximate in Formula 1 is: assuming $p(x) \approx q(x)$. In addition, in

Formula 1, $\dfrac{p(y|x)}{q(y|x)}$ is an importance weight of a sample.

It is worthwhile to note that importance weights can be separately calculated for a positive sample (that is, a user performs specific behavior) and a negative sample (that is, a user has not performed specific behavior) by constructing different sample streams, and the importance weights are substituted back into the above-mentioned formula, so that the loss function $L_{iw}$ corrected based on the importance weights can be obtained.

The following describes some methods for calculating importance weights for a positive sample and a negative sample:

A first method is a calculation method applicable to a sample stream constructed by using an ESDFM method.

In the ESDFM method, a waiting time window is set. To be specific, for a negative sample generated in real time, a waiting time window is set, so that the negative sample waits for generation of a positive sample (that is, waits for specific behavior of a user). Within the waiting time window, if a positive sample is received, the arriving positive sample is used to replace the negative sample and delivered to the downstream for processing; or if no positive sample is received, the negative sample is directly delivered to the downstream for processing.

After the above-mentioned sample stream is constructed, two sub-models are trained to respectively predict two probabilities $p_{dp}$ and $p_{rn}$ for each sample. $p_{dp}$ indicates a probability that the specific behavior of the user has a delay, and $p_{rn}$ indicates a probability that the user does not perform the specific behavior. Then, for the positive sample, an importance weight corresponding to the positive sample is set to: $(1 + p_{dp}(x))p_{rn}(x)$, and for the negative sample, an importance weight corresponding to the negative sample is set to: $1 + p_{dp}(x)$.

This method is merely applicable to the sample stream constructed by using the ESDFM method. In addition, in this method, two sub-models need to be trained, and dependency on prediction effects of the sub-models is relatively high.

A second method is a calculation method applicable to a sample stream constructed by using a Defer method.

In the Defer method, two waiting time windows are set: $w_1$ and $w_2$, where a length of $w_2$ is greater than that of $w_1$. For a negative sample generated in real time, waiting is first performed for a time of $w_1$. Within the time of $w_1$, if a corresponding positive sample is received, the arriving positive sample is used to replace the negative sample and delivered to the downstream for processing; or if no positive sample is received, the negative sample is directly delivered to the downstream for processing. In addition, after a time of $w_2$, non-delayed samples (including a positive sample received within the time of $w_1$ and a negative sample for which no positive sample is received after the time of $w_2$) are delivered again.

After the above-mentioned sample stream is constructed, one sub-model is trained to predict a probability $p_{dp}$ for each sample. In addition, $f_\theta(x)$ is used to represent a probability predicted by a master model (that is, a model for predicting whether a user performs specific behavior) for each sample. Then, for the negative sample, an importance weight corresponding to the negative sample is set to: $(1 - f_\theta(x))/\left(1 - f_\theta(x) + \tfrac{1}{2}p_{dp}(x)\right)$. For the positive sample, an importance weight corresponding to the positive sample is set to: $f_\theta(x)/\left(f_\theta(x) - \tfrac{1}{2}p_{dp}(x)\right)$.

This method is merely applicable to the sample stream constructed by using the Defer method.

A third method is a calculation method applicable to a sample stream in any form.

In this method, a random variable $X$ is used to represent a feature, a random variable $Y \in \{0,1\}$ is used to represent whether a sample has been converted before entering a model for training (1 represents yes, and 0 represents no), a random variable $C \in \{0,1\}$ represents whether a sample is converted finally, and a random variable $S \in \{0,1\}$ represents

whether a sample is marked correctly. In addition, an importance weight of a positive sample is set to: $\dfrac{1}{P(S=1|C=1,X=x)}$, and

an importance weight of a negative sample is set to: $1 - \dfrac{P(S=1|C=1,X=x)}{P(Y=0|X=x)}$. Finally, two models are separately trained to estimate $P(S = 1|C = 1, X = x)$ and $1 - \dfrac{P(S=1|C=1,X=x)}{P(Y=0|X=x)}$.

In this method, two sub-models need to be constructed, and dependency on prediction effects of the sub-models is high.

In view of corresponding disadvantages of the above-mentioned methods, in embodiments of this specification, the following improvements are proposed:

First, when a sample set is constructed, a label indicating whether specific behavior performed by a user has a delay is added to a sample.

To be specific, in this solution, two labels are set for each sample in the sample set, so that a sample category indicating a delay status can be determined for each sample. Then, weighted combination is performed on corresponding prediction losses based on the sample category of each sample. As such, different importance considerations can be performed for samples with different delay statuses in a training process. This helps improve accuracy of user behavior prediction.

Second, only one sub-model is trained to predict a probability that a negative sample is converted finally.

In the previous first method and second method, a sub-model needs to be trained to predict a probability that specific behavior of a user has a delay. However, actually, whether specific behavior of a user has a delay can be distinguished, that is, does not need to be predicted.

Finally, samples with different delay statuses are given different importance weights.

The following describes the third improvement in detail:

First, some variables are defined as follows:

$X$: represents a sample feature.

$Y \in \{0,1\}$: represents a label indicating whether a user has performed specific behavior currently.

$C \in \{0,1\}$: represents a label indicating whether a user performs specific behavior finally.

$T \in \{0,1\}$: represents a label indicating whether a user performs specific behavior within first duration.

In a sample stream, the three labels have the following relationship: $T = 1 \Longrightarrow Y = 1 \Longrightarrow C = 1$

For a given sample stream, label $C$ is unobservable, and only $Y$ can be observed. However, calculating a loss function based on label $Y$ causes an error, but the loss function cannot be directly calculated based on label $C$. With reference to the above-mentioned importance sampling method, this solution calculates an ideal loss function $L_{idea}$ according to the following formula:

$$
\begin{aligned}
L_{idea} &= \mathbb{E}_{(x,t,c)\sim(X,T,C)} l(c, f_\theta(x)) \\
&= \iiint l(c, f_\theta(x)) P(X = x, T = t, C = c)\,dxdtdc \\
&\xrightarrow{c=y} \iiint l(y, f_\theta(x)) P(X = x, T = t, C = y)\,dxdtdy \\
&= \iiint l(y, f_\theta(x)) \frac{P(X = x, T = t, C = y)}{P(X = x, T = t, Y = y)} P(X = x, T = t, Y = y)\,dxdtdy \\
&= \iiint l(y, f_\theta(x)) \frac{P(C = y|X = x, T = t)}{P(Y = y|X = x, T = t)} P(X = x, T = t, Y = y)\,dxdtdy \\
&= \mathbb{E}_{(x,t,y)\sim(X,T,Y)} \frac{P(C = y|X = x, T = t)}{P(Y = y|X = x, T = t)} l(y, f_\theta(x))
\end{aligned}
$$

(Formula 2)

It can be learned from Formula 2 that, as long as an importance weight $\frac{P(C=y|X=x,T=t)}{P(Y=y|X=x,T=t)}$ of each sample is calculated, the ideal loss function $L_{idea}$ can be estimated based on label $Y$.

The inventive concept of this solution is introduced above, and this solution is described in detail below.

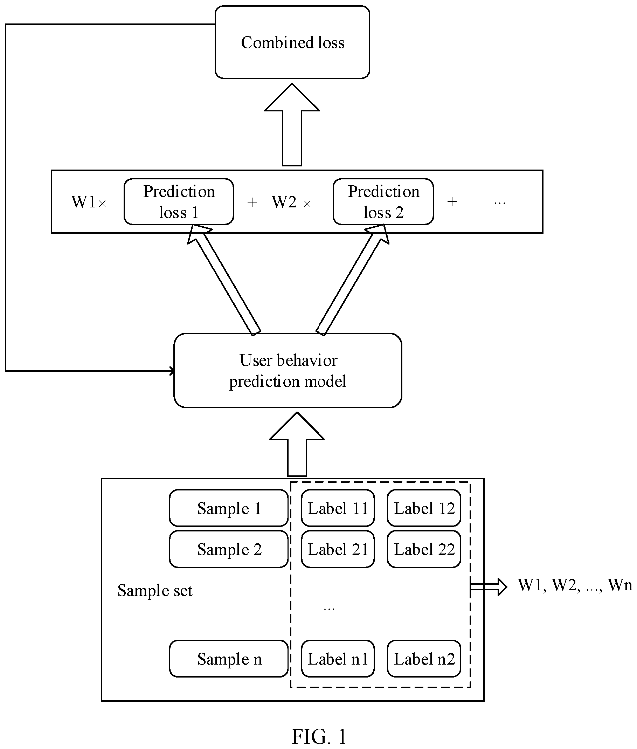

FIG. 1 is a schematic diagram illustrating an implementation scenario of embodiments disclosed in this specification. In FIG. 1, a sample set is generated through streaming, and includes a plurality of samples corresponding to a plurality of users. Each sample includes two labels. One label (referred to as a first label below) is added when a sample is generated in real time by a target service, and indicates whether a corresponding user has performed specific behavior on a target object currently. The other label (referred to as a second label below) is additionally added by using this solution, and indicates whether the specific behavior of the corresponding user is within first duration starting from exposure of the target object to the first user. It is worthwhile to note that, for any sample, a sample category that indicates a delay status and to which the sample belongs can be determined based on two label values of the sample.

In FIG. 1, after a sample feature of each sample in the sample set is input into a user behavior prediction model, a prediction result of each sample that indicates whether a corresponding user performs specific behavior can be obtained. Then, a prediction loss of each sample can be obtained based on the prediction result and a first label value of each sample. Finally, a weight value of each sample is determined based on a sample category to which each sample belongs, weighted combination is performed on the prediction loss of each sample based on the weight value of each sample, and a parameter of the user behavior prediction model is adjusted based on an obtained combined loss.

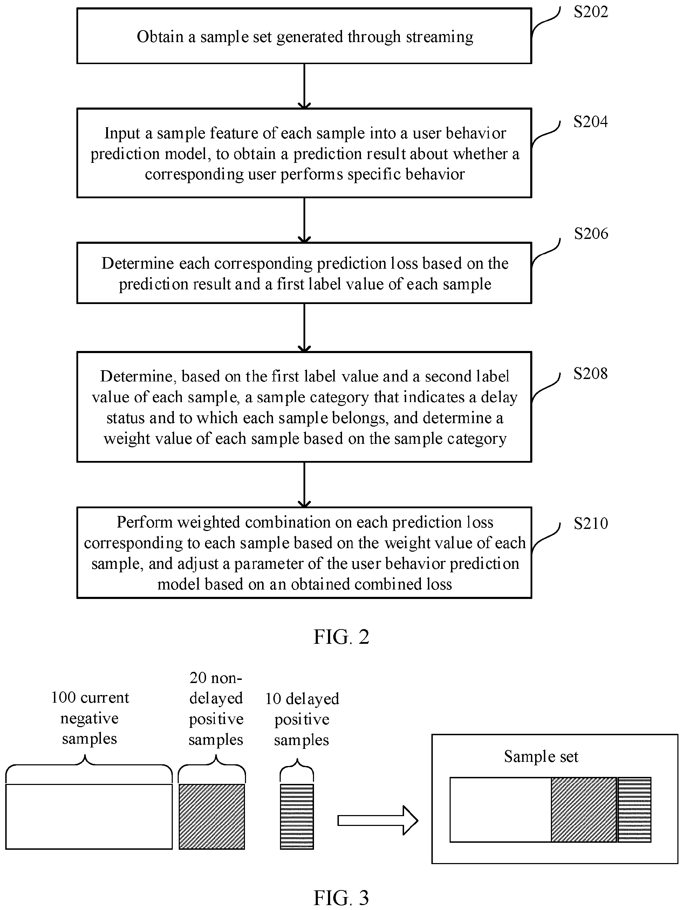

FIG. 2 is a flowchart illustrating a method for training a user behavior prediction model according to some embodiments. It is worthwhile to note that the method relates to a plurality of rounds of iterative update for a user behavior prediction model, and FIG. 2 shows steps included in any round of iterative update. It can be understood that, a plurality of rounds of iterative update for the user behavior prediction model can be implemented by repeatedly performing the shown steps, and then a user behavior prediction model obtained after the last round of iterative update is used as a finally used model.

As shown in FIG. 2, the method can include the following steps.

Step S202: Obtain a sample set generated through streaming.

The above-mentioned sample set can include a plurality of samples corresponding to a plurality of users, and the plurality of samples can all be generated in a specific time period (for example, one day or one week from a current time). Any sample includes a sample feature, a first label, and a second label. The sample feature can include a user feature and an object feature of a target object. Certainly, in practice, the above-mentioned sample feature can alternatively include only the user feature.

The above-mentioned user feature can include a basic attribute feature of a user, for example, a user identifier, hobbies and interests, registration duration, an education degree, the latest browsing history, or the latest shopping history; and can further include a time-related feature, for example, an execution time of specific behavior (which is described below). In different scenarios, the above-mentioned target object varies, and corresponds to different object features. For example, when the target object is user's benefits, the object feature can include a quota of the user's benefits (for example, a face value of a coupon), a use channel of the user's benefits (for example, the user's benefits can be used only when a certain bank card is used for payment), a use range of the user's benefits, etc. When the target object is a product, the object feature can include a category, a sales volume, a price, etc. of the product. When the target object is an advertisement picture, the object feature can include a picture pixel, text content in the picture, etc. In addition, the object feature can further include an object identifier and a time-related feature, for example, an exposure time of the target object.

In addition, the above-mentioned first label indicates whether a corresponding user has performed specific behavior on the target object currently (that is, in a specific time period), and can be added when a target service generates a sample in real time. In an example in which the target object is user's benefits, the specific behavior here can be tap behavior. In an example in which the target object is a product, the specific behavior here can be purchase behavior. In an example in which the target object is an advertisement picture, the specific behavior here can be tap behavior. Certainly, in practice, as the target object varies, the specific behavior can further include registration behavior, login behavior, follow behavior, etc.

The above-mentioned second label is additionally added by using this solution, and indicates whether the specific behavior of the corresponding user is within first duration starting from exposure of the target object to the user.

It is worthwhile to note that the above-mentioned sample set can be generated through streaming. The following describes a process of generating the sample set through streaming.

In some embodiments, for a target sample generated in real time by the target service, if a first label value of the target sample indicates that a corresponding user does not perform specific behavior (that is, the target sample is a negative sample), the target sample is added to a cache pool, and an expiration time that is the first duration (for example, 10 minutes or 15 minutes) from a current moment is set for the target sample. If a first label value indicates that a corresponding user has performed specific behavior (that is, the target sample is a positive sample), the cache pool is searched for an unexpired matched sample with a same target sample feature, and the target sample is added to the sample set after a second label of the target sample is determined based on a search result.

In more specific embodiments, if the search result indicates that the matched sample is found, the target sample is added to the sample set after the second label that is assigned a first value is added to the target sample, and the matched sample is removed from the cache pool, where the first value of the second label indicates that the specific behavior is within the first duration. If the search result indicates that the matched sample is not found, the target sample is added to the sample set after the second label that is assigned a second value is added to the target sample, where the second value of the second label indicates that the specific behavior is not within the first duration.

In addition, an expiration time of each sample in the cache pool can be further monitored, and in response to reaching an expiration time of any sample, the sample (which is referred to as an expired sample below) is added to the sample set after a default second label is added to the sample. Certainly, in practice, after the expired sample is added to the sample set, the expired sample can be removed from the cache pool, so that only an unexpired sample is stored in the cache pool. In addition, in practice, a default value of the second label is usually the first value.

It is worthwhile to note that the above-mentioned target sample feature can be a time-independent feature in sample features of a sample, for example, can include a user identifier or an object identifier. In addition, the above-mentioned target service generates a corresponding sample in response to a service event. The service event can include a first event that the target object is exposed to the corresponding user, a second event that the user performs predetermined behavior on the target object, etc. It is worthwhile to note that both the above-mentioned first event and the above-mentioned second event occur in the above-mentioned specific time period.

In embodiments of this specification, a sample generated in response to the first event is referred to as a negative sample, that is, a first label value of the sample indicates that a corresponding user has not performed specific behavior. A sample generated in response to the second event is referred to as a positive sample, that is, a first label value of the sample indicates that a user has performed specific behavior.

Further, in embodiments of this specification, a positive sample to which a second label assigned the first value is added is referred to as a non-delayed positive sample, a positive sample to which a second label assigned the second value is added is referred to as a delayed positive sample, and a negative sample to which the default second label is added is referred to as a current negative sample. It should be understood that the current negative sample here means that the current negative sample is a negative sample in the above-mentioned specific time period, and may be converted into a positive sample (that is, a user performs specific behavior after the specific time period), or may be a final negative sample.

In conclusion, the above-mentioned sample set can include three types of samples: the non-delayed positive sample, which indicates that a user performs specific behavior within the first duration; the delayed positive sample, which indicates that a user performs specific behavior after the first duration; and the current negative sample, which indicates that a user has not performed specific behavior.

For example, it is assumed that the cache pool stores 100 negative samples. In addition, it is further assumed that 30 positive samples are received, where 20 positive samples have matched negative samples in the cache pool, and 10 positive samples do not have matched negative samples. Therefore, the 20 positive samples can be added to the sample set as non-delayed positive samples, the 10 positive samples can be added to the sample set as delayed positive samples, and 80 remaining negative samples (that is, negative samples in the 100 negative samples other than the negative samples that match the 20 samples) can be added to the sample set as current negative samples, so that the generated sample set can be as shown in FIG. 3. In FIG. 3, the sample set includes 80 current negative samples, 20 non-delayed positive samples, and 10 delayed positive samples, that is, includes 110 samples.

In other embodiments, in addition to generating the sample set based on the above-mentioned first duration, second duration is further set. The second duration has the same start point as the first duration, and a length of the second duration is greater than that of the first duration, and can be, for example, 24 hours. Specifically, when any sample is added to the cache pool, the second duration is configured for the sample, and the second duration can be monitored. If the second duration elapses, the sample is added to the sample set again. In addition, for the non-delayed positive sample, the second duration can also be monitored for the non-delayed positive sample, and after the second duration elapses, the non-delayed positive sample is also added to the sample set again.

It is worthwhile to note that to implement monitoring for the second duration, the expired sample (that is, the current negative sample) removed from the cache pool and the received non-delayed positive sample can be stored in a target storage unit, so that when the second duration elapses, the expired sample and the received non-delayed positive sample are added to the sample set again.

Certainly, in another implementation, the expired sample in the cache pool may not be removed first, but can be removed from the cache pool after the second duration elapses. It should be understood that in this case, the current negative sample does not need to be added to the target storage unit, but only the non-delayed positive sample needs to be added to the target storage unit.

It should be understood that the above-mentioned addition of the current negative sample and the non-delayed positive sample to the sample set again helps maintain distribution balance of different types of samples.

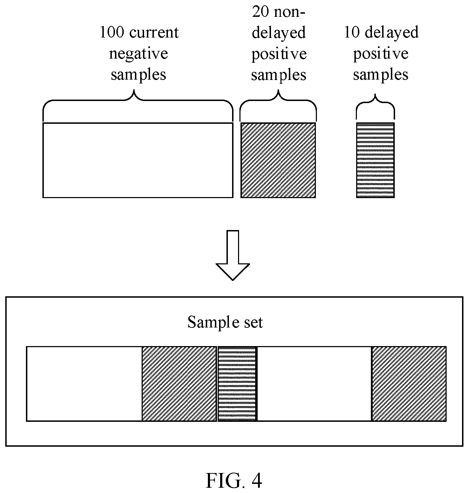

In the previous example, 80 current negative samples and 20 non-delayed positive samples can be added to the sample set again, so that the generated sample set can be as shown in FIG. 4. In FIG. 4, the sample set includes two groups of 80 current negative samples, two groups of 20 non-delayed positive samples, and 10 delayed positive samples.

In still other embodiments, all received samples can be added to the sample set without waiting for the above-mentioned first duration and the above-mentioned second duration. In this method, for any received target sample, if a first label value indicates that a corresponding user does not perform specific behavior, the target sample is added to the sample set after the default second label is added to the target sample. If a first label value indicates that a corresponding user has performed specific behavior, the target sample is added to the sample set after the second label assigned the second value is added to the target sample. Therefore, the sample set includes only two types of samples: the current negative sample and the delayed positive sample.

It can be learned that this solution can support any form of sample stream. This greatly improves flexibility of this solution.

Step S204: Input a sample feature of each sample into a user behavior prediction model, to obtain a prediction result about whether a corresponding user performs specific behavior.

The above-mentioned user behavior prediction model can be implemented as a deep neural network (DNN) model, a convolutional neural network (CNN) model, a logistic regression (LR) model, etc.

In a specific example, the above-mentioned user behavior prediction model can include a feature processing layer and a classification layer. The feature processing layer first processes a user feature of any sample into a first embedding vector, and processes an object feature into a second embedding vector; then performs pooling processing on the first embedding vector and the second embedding vector, to obtain a first pooling vector and a second pooling vector;

and finally fuses the first pooling vector and the second pooling vector into a feature vector. The classification layer obtains a prediction result of the sample based on the feature vector.

Step S206: Determine each corresponding prediction loss based on the prediction result and a first label value of each sample.

Specifically, each corresponding prediction loss can be calculated based on the prediction result and the first label value of each sample by using an MAE loss function or an MSE loss function.

Step S208: Determine, based on the first label value and a second label value of each sample, a sample category that indicates a delay status and to which each sample belongs, and determine a weight value of each sample based on the sample category.

The sample category here can include: the non-delayed positive sample, which indicates that a user performs specific behavior within the first duration; the delayed positive sample, which indicates that a user performs specific behavior after the first duration; and the current negative sample, which indicates that a user has not performed specific behavior.

Specifically, the sample category of the sample can be determined based on the first label value and the second label value of the sample. More specifically, if a first label value of any sample indicates that a corresponding user has performed specific behavior currently, and a second label value indicates that the specific behavior is within the first duration, it is determined that the sample is a non-delayed positive sample; if a first label value of any sample indicates that a corresponding user has performed specific behavior currently, and a second label value indicates that the specific behavior is not within the first duration, it is determined that the sample is a delayed positive sample; or if a first label value of any sample indicates that a corresponding user has not performed specific behavior, it is determined that the sample is a current negative sample.

Similarly, the sample category to which each sample belongs can be determined.

Then, for any sample that is a non-delayed positive sample, a first value can be used as a weight value of the any sample. In an example, the first value here is 1. For any sample that is a delayed positive sample, a second value can be used as a weight value of the any sample. The second value is greater than the first value. In an example, the second value is 2. For any sample that is a current negative sample, a probability that the sample is a final negative sample is predicted by using a classification model, and the probability is used as a weight value of the any sample.

The following describes a reason why the above-mentioned first value can be set to 1:

As described above, to estimate an ideal loss function $L_{idea}$ based on label $Y$, a prediction loss of each sample needs to be corrected based on an importance weight: $\frac{P(C=y|X=x,T=t)}{P(Y=y|X=x,T=t)}$. $Y$ is a first label, $T$ is a second label, $X$ is a sample feature, and $C$ is a converted label (which indicates whether a user performs specific behavior finally).

It should be understood that for a non-delayed positive sample, $\frac{P(C=y|X=x,T=t)}{P(Y=y|X=x,T=t)} = \frac{P(C=1|X=x,T=1)}{P(Y=1|X=x,T=1)}$. In addition, because the non-delayed sample is necessarily a converted sample, a numerator and a denominator of the formula are equal, and therefore $\frac{P(C=1|X=x,T=1)}{P(Y=1|X=x,T=1)} = 1$.

Then, the following describes a reason why the above-mentioned second value can be set to 2:

For a delayed positive sample, $\frac{P(C=y|X=x,T=t)}{P(Y=y|X=x,T=t)} = \frac{P(C=1|X=x,T=0)}{P(Y=1|X=x,T=0)} = \frac{1}{P(Y=1|X=x,T=0,C=1)}$. In a process of generating a sample stream, a negative sample is not replaced with a delayed positive sample. As such, each delayed positive sample has a corresponding negative sample, and the two samples are corresponding to the same user. Therefore, for a user, a quantity of marked delayed positive samples is only half, that is, a denominator of the formula is equal to 1/2. Therefore, $\frac{1}{P(Y=1|X=x,T=0,C=1)} = 2$.

Finally, the above-mentioned classification model can be specifically implemented in various forms such as a tree model and a deep neural network (DNN). The tree model specifically includes, for example, a PS-Smart tree model or a GBDT tree.

It is worthwhile to note that the classification model can be a pre-trained model, that is, the classification model has been trained before the user behavior prediction model is trained. Certainly, in practice, the classification model can alternatively be trained together with the user behavior prediction model. When the classification model and the user behavior prediction model are trained together, tuning frequencies of the two models can be different.

For example, after one or more times of iterative training are performed on the user behavior prediction model, a final negative sample can be selected from the sample set and used as a positive-example sample, and a non-delayed sample can be selected as a negative-example sample. Then, the classification model is trained based on the positive-example sample and the negative-example sample.

In conclusion, in this solution, only one sub-model needs to be trained to predict a probability of a final negative sample, so that training resources can be saved.

Certainly, in practice, the above-mentioned first value and the above-mentioned second value can alternatively be set to other values. For example, the first value is set to n, and the second value is set to 2n, provided that the second value is greater than the first value.

In addition, for the current negative sample, a weight value corresponding to the current negative sample can be set to a fixed value. This is not limited in this specification.

Step S210: Perform weighted combination on each prediction loss corresponding to each sample based on the weight value of each sample, and adjust a parameter of the user behavior prediction model based on an obtained combined loss.

Specifically, weighted summation or weighted averaging can be performed on each prediction loss by using the weight value of each sample as a weight value of each corresponding prediction loss, to obtain the combined loss. Then, based on the combined loss, the parameter of the user behavior prediction model is adjusted by using an existing gradient back propagation method.

In conclusion, the method for training a user behavior prediction model provided in embodiments of this specification can improve prediction accuracy of the user behavior prediction model. In addition, because the prediction accuracy of the user behavior prediction model is improved, a conversion rate for a user can be maximized. Finally, because this solution is applicable to any form of sample stream, this solution is a more general and effective method for resolving a positive sample delayed feedback problem.

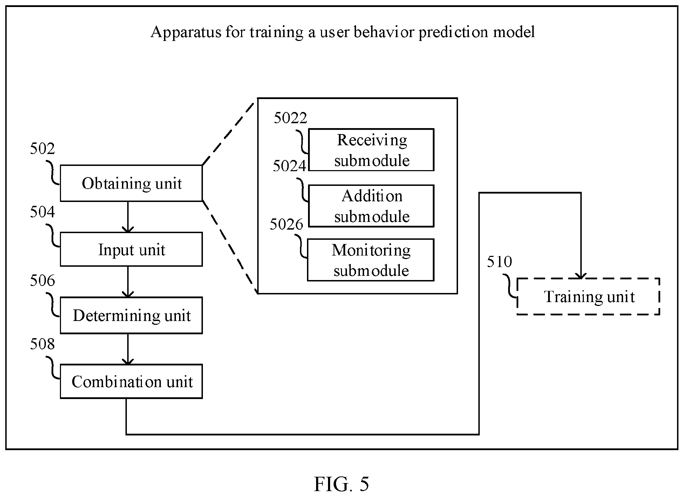

Corresponding to the above-mentioned method for training a user behavior prediction model, embodiments of this specification further provide an apparatus for training a user behavior prediction model. As shown in FIG. 5, the apparatus can include:

an obtaining unit 502, configured to obtain a sample set generated through streaming, where any sample includes a sample feature, a first label, and a second label, the first label indicates whether a corresponding user has performed specific behavior on a target object currently, and the second label indicates whether the specific behavior of the corresponding user is within first duration starting from exposure of the target object to the corresponding user;

an input unit 504, configured to input a sample feature of each sample into the user behavior prediction model, to obtain a prediction result about whether the corresponding user performs specific behavior;

a determining unit 506, configured to determine each corresponding prediction loss based on the prediction result and a first label value of each sample, where

the determining unit 506 is further configured to determine, based on the first label value and a second label value of each sample, a sample category that indicates a delay status and to which each sample belongs, and determine a weight value of each sample based on the sample category; and

a combination unit 508, configured to perform weighted combination on each prediction loss corresponding to each sample based on the weight value of each sample, and adjust a parameter of the user behavior prediction model based on an obtained combined loss.

In some embodiments, the above-mentioned sample category includes any one of the following:

a non-delayed positive sample, indicating that the user performs the specific behavior within the first duration;

a delayed positive sample, indicating that the user performs the specific behavior after the first duration; or

a current negative sample, indicating that the user has not performed the specific behavior.

In some embodiments, the determining unit 506 is specifically configured to:

if a first label value of any first sample indicates that specific behavior has been performed, and a second label value indicates that the specific behavior is within the first duration, determine that the first sample is the non-delayed positive sample;

if a first label value of any first sample indicates that specific behavior has been performed, and a second label value indicates that the specific behavior is not within the first duration, determine that the first sample is the delayed positive sample; or

if a first label value of any first sample indicates that specific behavior has not been performed, determine that the first sample is the current negative sample.

In some embodiments, the determining unit 506 is further configured to:

if any first sample is the non-delayed positive sample, use a first value as a weight value of the first sample;

if any first sample is the delayed positive sample, use a second value as a weight value of the first sample, where the second value is greater than the first value; or

if any first sample is the current negative sample, predict, by using a classification model, a probability that the first sample is a final negative sample, and use the probability as a weight value of the first sample.

In some embodiments, the apparatus further includes:
a training unit 510, configured to use the final negative sample as a positive-example sample, use the delayed positive sample as a negative-example sample, and train the classification model based on the positive-example sample and the negative-example sample.

The positive-example sample has a positive-example label, which indicates that the corresponding sample is a final negative sample. The negative-example sample has a negative-example label, which indicates that the corresponding sample is not the final negative sample.

In some embodiments, the obtaining unit 502 includes:

a receiving submodule 5022, configured to receive a target sample generated in real time by a target service, where the target sample has only the first label; and

an addition submodule 5024, configured to: if a first label value of the target sample indicates that no specific behavior is performed, add the target sample to a cache pool, and set an expiration time that is the first duration from a current moment for the target sample; or

an addition submodule 5024, configured to: if a first label value of the target sample indicates that specific behavior has been performed, search a cache pool for an unexpired matched sample with a same target sample feature, and add the target sample to the sample set after determining a second label of the target sample based on a search result.

In some embodiments, the addition submodule 5024 is specifically configured to:

if the matched sample is found, add the target sample to the sample set after adding the second label that is assigned a first value to the target sample, and remove the matched sample from the cache pool, where the first value of the second label indicates that the specific behavior is within the first duration; or

if the matched sample is not found, add the target sample to the sample set after adding the second label that is assigned a second value to the target sample, where the second value of the second label indicates that the specific behavior is not within the first duration.

In some embodiments, the obtaining unit 502 further includes:
a monitoring submodule 5026, configured to monitor an expiration time of each sample in the cache pool, in response to reaching an expiration time of a first sample, add the first sample to the sample set after adding a default second label to the first sample, and remove the first sample from the cache pool.

In some embodiments, the addition submodule 5024 is further specifically configured to add the first sample to a target storage unit after removing the first sample from the cache pool, and add the first sample to the sample set again after waiting for second duration.

In some embodiments, the target service generates a corresponding sample in response to a service event. The service event includes a first event that the target object is exposed to the corresponding user, or a second event that the user performs predetermined behavior on the target obj ect.

In some embodiments, the combination unit 508 is specifically configured to:
perform weighted summation or weighted averaging on each prediction loss by using the weight value of each sample as a weight value of each corresponding prediction loss, to obtain the combined loss.

The functions of the functional units of the apparatus in the above-mentioned embodiments of this specification can be implemented by performing the steps in the above-mentioned method embodiments. Therefore, a specific working process of the apparatus provided in embodiments of this specification is omitted here for simplicity.

An apparatus for training a user behavior prediction model provided in embodiments of this specification can improve accuracy of user behavior prediction.

According to embodiments in another aspect, a computer-readable storage medium is further provided. The computer-readable storage medium stores a computer program, and when the computer program is executed in a computer, the computer is enabled to perform the method described with reference to FIG. 2.

According to embodiments in still another aspect, a computing device is further provided, including a memory and a processor. The memory stores executable code, and when executing the executable code, the processor implements the method described with reference to FIG. 2.

Embodiments of this specification are described in a progressive way. For the same or similar parts of the embodiments, mutual references can be made between the embodiments. Each embodiment focuses on a difference from other embodiments. Particularly, the medium or device embodiments are basically similar to the method embodiments, and therefore are described briefly. For related parts, references can be made to some descriptions in the method embodiments.

Specific embodiments of this specification are described above. Other embodiments fall within the scope of the appended claims. In some cases, actions or steps described in the claims can be performed in a sequence different from that in the embodiments and desired results can still be achieved. In addition, the process depicted in the accompanying drawings does not necessarily need a particular order or consecutive order to achieve the desired results. In some implementations, multi-tasking and parallel processing are feasible or may be advantageous.

It should be understood that the above-mentioned descriptions are merely some specific implementations of this specification, but are not intended to limit the protection scope of this specification. Any modification, equivalent replacement, or improvement made based on the technical solutions in this specification shall fall within the protection scope of this specification.

**Claims**

1. A method for training a user behavior prediction model, comprising:

    obtaining a sample set generated through streaming, wherein any sample comprises a sample feature, a first label, and a second label, the first label indicates whether a corresponding user has performed specific behavior on a target object currently, and the second label indicates whether the specific behavior of the corresponding user is within first duration starting from exposure of the target object to the corresponding user;
    inputting a sample feature of each sample into the user behavior prediction model, to obtain a prediction result about whether the corresponding user performs specific behavior;
    determining each corresponding prediction loss based on the prediction result and a first label value of each sample;
    determining, based on the first label value and a second label value of each sample, a sample category that indicates a delay status and to which each sample belongs, and determining a weight value of each sample based on the sample category; and
    performing weighted combination on each prediction loss corresponding to each sample based on the weight value of each sample, and adjusting a parameter of the user behavior prediction model based on an obtained combined loss.

2. The method according to claim 1, wherein the sample category comprises:

    a non-delayed positive sample, indicating that the user performs the specific behavior within the first duration;
    a delayed positive sample, indicating that the user performs the specific behavior after the first duration; or
    a current negative sample, indicating that the user has not performed the specific behavior.

3. The method according to claim 2, wherein determining a sample category that indicates a delay status and to which each sample belongs comprises:

    upon determining that a first label value of any first sample indicates that specific behavior has been performed, and a second label value indicates that the specific behavior is within the first duration, determining that the first sample is the non-delayed positive sample;
    upon determining that a first label value of any first sample indicates that specific behavior has been performed, and a second label value indicates that the specific behavior is not within the first duration, determining that the first sample is the delayed positive sample; or
    upon determining that a first label value of any first sample indicates that specific behavior has not been performed, determining that the first sample is the current negative sample.

4. The method according to claim 2, wherein determining a weight value of each sample comprises:

    upon determining that any first sample is the non-delayed positive sample, using a first value as a weight value of the first sample;
    upon determining that any first sample is the delayed positive sample, using a second value as a weight value of the first sample, wherein the second value is greater than the first value; or

upon determining that any first sample is the current negative sample, predicting, by using a classification model, a probability that the first sample is a final negative sample, and using the probability as a weight value of the first sample.

5. The method according to claim 4, further comprising:
using the final negative sample as a positive-example sample, using the delayed positive sample as a negative-example sample, and training the classification model based on the positive-example sample and the negative-example sample.

6. The method according to claim 1, wherein obtaining a sample set generated through streaming comprises:

   receiving a target sample generated in real time by a target service, wherein the target sample has only the first label; and
   upon determining that a first label value of the target sample indicates that no specific behavior is performed, adding the target sample to a cache pool, and setting an expiration time that is the first duration from a current moment for the target sample; or
   upon determining that a first label value of the target sample indicates that specific behavior has been performed, searching a cache pool for an unexpired matched sample with a same target sample feature, and adding the target sample to the sample set after determining a second label of the target sample based on a search result.

7. The method according to claim 6, wherein adding the target sample to the sample set after determining a second label of the target sample based on a search result comprises:

   upon determining that the matched sample is found, adding the target sample to the sample set after adding the second label that is assigned a first value to the target sample, and removing the matched sample from the cache pool, wherein the first value of the second label indicates that the specific behavior is within the first duration; or
   upon determining that the matched sample is not found, adding the target sample to the sample set after adding the second label that is assigned a second value to the target sample, wherein the second value of the second label indicates that the specific behavior is not within the first duration.

8. The method according to claim 6, wherein obtaining a sample set generated through streaming further comprises:
monitoring an expiration time of each sample in the cache pool, in response to reaching an expiration time of a first sample, adding the first sample to the sample set after adding a default second label to the first sample, and removing the first sample from the cache pool.

9. The method according to claim 8, wherein obtaining a sample set generated through streaming further comprises:
adding the first sample to a target storage unit after removing the first sample from the cache pool, and adding the first sample to the sample set again after waiting for second duration.

10. The method according to claim 6, wherein the target service generates a corresponding sample in response to a service event; and the service event comprises a first event that the target object is exposed to the corresponding user, or a second event that the user performs predetermined behavior on the target object.

11. The method according to claim 1, wherein performing weighted combination on each prediction loss corresponding to each sample comprises:
performing weighted summation or weighted averaging on each prediction loss by using the weight value of each sample as a weight value of each corresponding prediction loss, to obtain the combined loss.

12. An apparatus for training a user behavior prediction model, wherein the apparatus is configured to perform the method according to any one of claims 1 to 11.

13. A computer-readable storage medium comprising instructions stored therein that, when executed by a processor of a computing device, cause the computing device to perform the method according to any one of claims 1 to 11.

14. A computing device comprising a memory and a processor, wherein the memory stores executable instructions that, in response to execution by the processor, cause the computing device to perform the method according to any one of claims 1 to 11.

FIG. 1

Obtain a sample set generated through streaming     S202

Input a sample feature of each sample into a user behavior prediction model, to obtain a prediction result about whether a corresponding user performs specific behavior     S204

Determine each corresponding prediction loss based on the prediction result and a first label value of each sample     S206

Determine, based on the first label value and a second label value of each sample, a sample category that indicates a delay status and to which each sample belongs, and determine a weight value of each sample based on the sample category     S208

Perform weighted combination on each prediction loss corresponding to each sample based on the weight value of each sample, and adjust a parameter of the user behavior prediction model based on an obtained combined loss     S210

FIG. 2

100 current negative samples

20 non-delayed positive samples

10 delayed positive samples

Sample set

FIG. 3

100 current
negative
samples

20 non-
delayed
positive
samples

10 delayed
positive
samples

Sample set

FIG. 4

Apparatus for training a user behavior prediction model

502

Obtaining unit

504

Input unit

506

Determining unit

508

Combination unit

5022

Receiving submodule

5024

Addition submodule

5026

Monitoring submodule

510

Training unit

FIG. 5

Europäisches
Patentamt

European
Patent Office

Office européen
des brevets

# EUROPEAN SEARCH REPORT

**Application Number**

EP 24 21 6309

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIYU GU ET AL: "Real Negatives Matter: Continuous Training with Real Negatives for Delayed Feedback Modeling", ARXIV.ORG, CORNELL UNIVERSITY LIBRARY, 201 OLIN LIBRARY CORNELL UNIVERSITY ITHACA, NY 14853, 29 April 2021 (2021-04-29), XP081945809, * abstract, sections 2-5, fig. 2, table 2 * | 1-14 | INV. G06Q30/0242 G06Q30/0251 ADD. G06N3/084 |
| X | CN 113 988 922 A (NANJING UNIVERSITY OF TECHNOLOGY) 28 January 2022 (2022-01-28) * claims 1, 8-10 * | 1-14 | |
| X | US 2021/350284 A1 (AGRAWAL PARAG [US] ET AL) 11 November 2021 (2021-11-11) * paragraphs [0004], [0034] - [0071] * | 1-14 | |

**TECHNICAL FIELDS SEARCHED (IPC)**

G06Q
G06N

The present search report has been drawn up for all claims

| Place of search | Date of completion of the search | Examiner |
|---|---|---|
| The Hague | 2 April 2025 | Pomocka, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 6309

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2025

| Patent document cited in search report | | Publication date | Patent family member(s) | Publication date |
|---|---|---|---|---|
| CN 113988922 | A | 28-01-2022 | NONE | |
| US 2021350284 | A1 | 11-11-2021 | NONE | |

EPO FORM P0459

For more details about this annex : see Official Journal of the European Patent Office, No. 12/82